# EUROPEAN PATENT APPLICATION

(11) **EP 1 452 256 A1**
(43) Date of publication of application: **01.09.2004**
(21) Application number: 03004304.6
(22) Date of filing: 27.02.2003
(51) Int. Cl.: B23B 51/00, B23B 51/02

(54) **Drill for boring anchor fixing hole**

(71) Applicant: Uchino, Munehito, Hiratsuka-shi, Kanagawa (JP)
(72) Inventor: Uchino, Munehito, Hiratsuka-shi, Kanagawa (JP); Yanagisawa, Tugio, Hiratsuka-shi, Kanagawa (JP)
(74) Representative: Forstmeyer, Dietmar, Dr. rer. nat., Dipl.-Chem.

(57) **Abstract**

A drill for boring an anchor fixing hole having an expanded configuration at a nearby area of a bottom part of the hole, wherein a stopper (4) having a diameter larger than an outside diameter of the drill main body (2) is disposed at a location near a shank (3) of the drill main body (2) and a surface (41) of the stopper (4) on a leading end side of the drill is a tapered curved surface which is expanded towards the shank (3) side from the leading end side of the drill. According to the drill of the present invention for boring an anchor fixing hole, an expanded bottom anchor fixing hole can be bored without using two kinds of drills and at a low cost.

## Description

### BACKGROUND OF THE INVENTION

### [Field of the Invention]

This invention relates to a drill for easily boring a hole for fixing an anchor member. More particularly, it relates to a drill for easily boring an anchor fixing hole having an expanded configuration at a nearby area of a bottom part of the hole.

### [Description of the Related Art]

An anchor member such as an anchor bolt is inserted in an anchor fixing hole formed in a member to be bored, such as a concrete wall material already constructed and thereafter, fixed to this hole by suitable means. As such an anchor member, there is known an "expansion anchor member", a nearby area of a bottom part of which (that side which is to be inserted in the anchor fixing hole) is expanded by striking or other means. According to this expansion anchor member, since its bottom part is expanded after it is inserted in the anchor fixing hole, it can mechanically firmly fixed to the hole with its expanded bottom part bitten into a hole wall of the anchor fixing hole.

An attempt is also made in which in order to more firmly fix the expansion anchor member to the anchor fixing hole, there is a provision of an anchor fixing hole having an expanded configuration at a nearby area of its bottom part (hereinafter referred to as the "expanded bottom anchor fixing hole", see FIG. 5). In case the expanded bottom anchor fixing hole of this type is to be bored, it is normally necessary to employ a first step and a second step as described hereinafter. In those first and second steps, two different kinds of drills are used.

After a normal hole (hole having a uniform sectional area) is bored as a lower hole by using a normal drill in the first step, a nearby area of a bottom part of the hole is cut so as to be expanded by using a specific drill (hereinafter referred to as the "expansion drill") whose cutting edge in a nearby area of its leading end is expanded. By doing so, an expanded bottom part 73 (see FIG. 5) is formed.

If the expansion drill should be used, it would be technically possible to bore an expanded bottom anchor fixing hole by using only one kind of drill. However, the unit price of the expansion drill is expensive compared with the normal drills because the expansion drill is complicated in structure. Moreover, the expansion drill is markedly severely worn and deteriorated in use. Because of the reasons just mentioned, it is not a normal practice that an expanded bottom anchor fixing hole is bored by using only the expansion drill.

### SUMMARY OF THE INVENTION

It is, therefore, an object of the present invention to provide a drill for boring an anchor fixing hole, which drill is capable of boring an expanded bottom anchor fixing hole without using two kinds of drills and at a low cost.

The present invention has achieved the above object by providing a drill for boring an anchor fixing hole having an expanded configuration at a nearby area of a bottom part of the hole, characterized in that a stopper having a diameter larger than an outside diameter of the drill main body is disposed at a location near a shank of the drill main body and a surface of the stopper on a leading end side of the drill is a tapered curved surface which is expanded towards the shank side from the leading end side of the drill.

The present invention has also achieved the above object by providing a method for drilling an anchor fixing hole by using the drill for boring an anchor fixing hole, characterized by comprising the steps of boring a member to be bored by using the drill for boring an anchor fixing hole until the stopper is abutted with a surface of the member to be bored, and in a state where the drill for boring an anchor fixing hole is rotated about an axis of the drill, moving the drill for boring an anchor fixing hole so as to cause precession serving the stopper as a fulcrum while keeping the tapered curved surface of the stopper abutted with the surface of the member to be bored to cut a nearby area of a bottom part of the anchor fixing hole thereby to form an expanded bottom part having an expanded configuration.

### BRIEF DESCRIPTION OF THE DRAWINGS

FIG. 1 is a front view showing a drill for boring an anchor fixing hole according to one embodiment of the present invention.
FIG. 2 is an operation diagram showing a state in which a lower hole is bored by using a drill for boring an anchor fixing hole according to one embodiment of the present invention.
FIG. 3 is an operation diagram showing the nearby area of a stopper in a drill for boring an anchor fixing hole according to one embodiment of the present invention which is in a state where the expanded bottom part of the anchor fixing hole is cut.
FIG. 4 is an operation diagram showing the nearby area of a leading end of a drill in a drill for boring an anchor fixing hole according to one embodiment of the present invention which is in a state where the expanded bottom part of the anchor fixing hole is cut.
FIG. 5 is a sectional view showing an expanded bottom anchor fixing hole which is bored by using a drill for boring an anchor fixing hole according to one embodiment of the present invention.

### DESCRIPTION OF THE EMBODIMENT

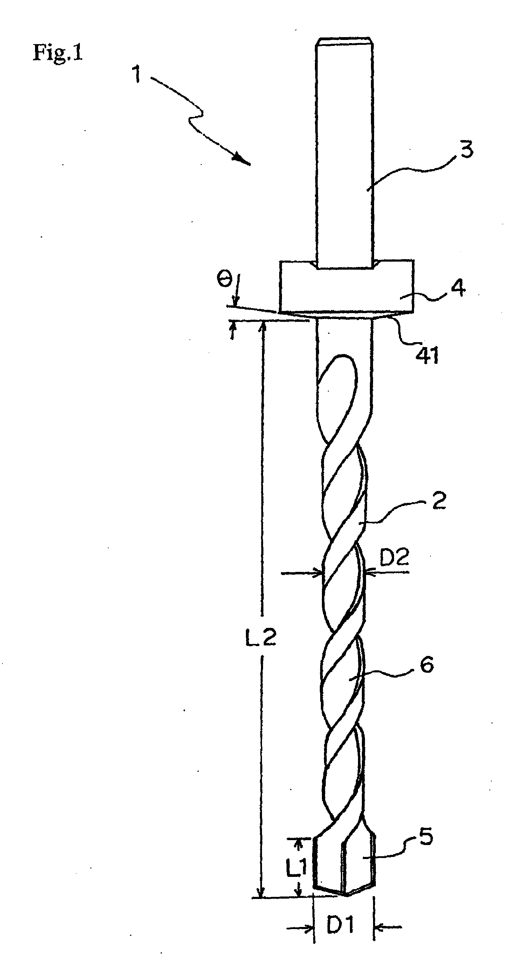

One preferred embodiment of a drill for boring an anchor fixing hole according to the present invention will be described hereinafter with reference to FIG. 1.

An anchor fixing hole boring drill (hereinafter occasionally simply referred to as the "drill") 1 according to this embodiment is designed such that, as shown in FIG. 1, in an anchor fixing hole boring drill adapted to bore an anchor fixing hole 72 having a configuration which is expanded in the nearby area of its bottom part, a stopper 4 having a diameter larger than the outside diameter of a drill main body 2 is provided at a location near a shank 3 of the drill main body 2 and a surface 41 of the stopper 4 on the leading end side of the drill 1 is a tapered curved surface which is expanded towards the shank 3 side from the leading end side of the drill 1.

The drill 1 according to this embodiment will be described in detail. The drill 1, as shown in FIG. 1, is same in basic construction as the normal drill only except that the stopper 4 is employed. The drill main body 2, as a main part of the drill, is provided with a cutting edge 5 and a spiral groove 6 adapted to discharge chips. The shank 3 is to be attached with a driving source (not shown) for rotationally driving the drill.

The stopper 4 is joined and fixed to the drill main body 2 by welding. In the stopper 4, an angle θ formed between the orthogonal line with respect to the axis of the drill and the tapered curved surface 41 is preferably 6 to 30 degrees and more preferably 8 to 12 degrees, and is properly set depending on the distance L2 from the leading end of the drill main body 2 to the tapered curved surface 41. A difference (D1-D2) between an outside diameter D1 of a cutting edge 5 disposed at a location near a leading end of the drill main body 2 and an outside diameter D2 of the drill main body 2 at an area where the spiral groove 6 is formed, is preferably 0.5 to 3 mm, and is properly set depending on the distance L2.

An effective length L1 of the area where the cutting edge 5 is disposed is preferably 10 to 20 mm in the direction of the axis of the drill, and is properly set depending on the distance L2. The distance L2 is preferably 30 to 100 mm.

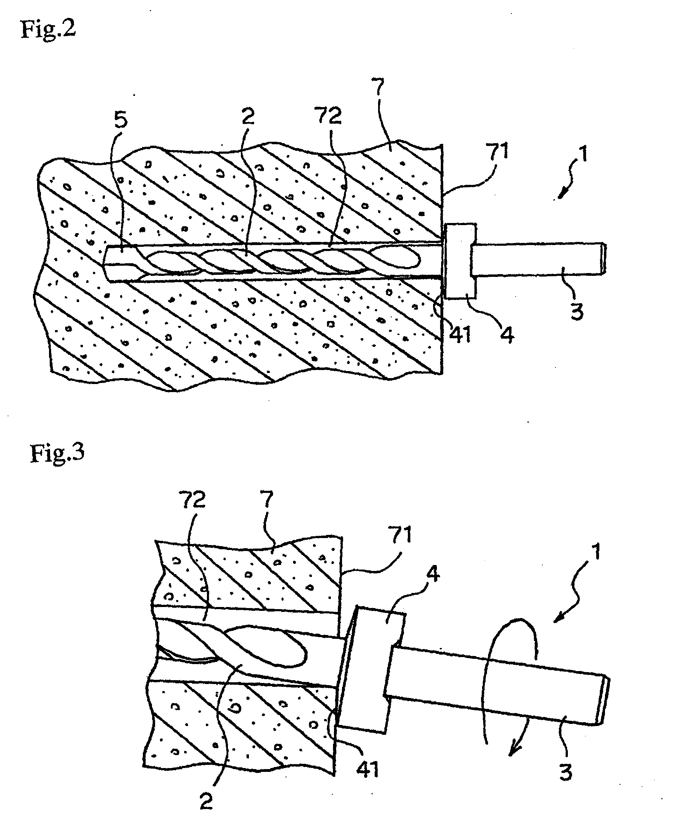

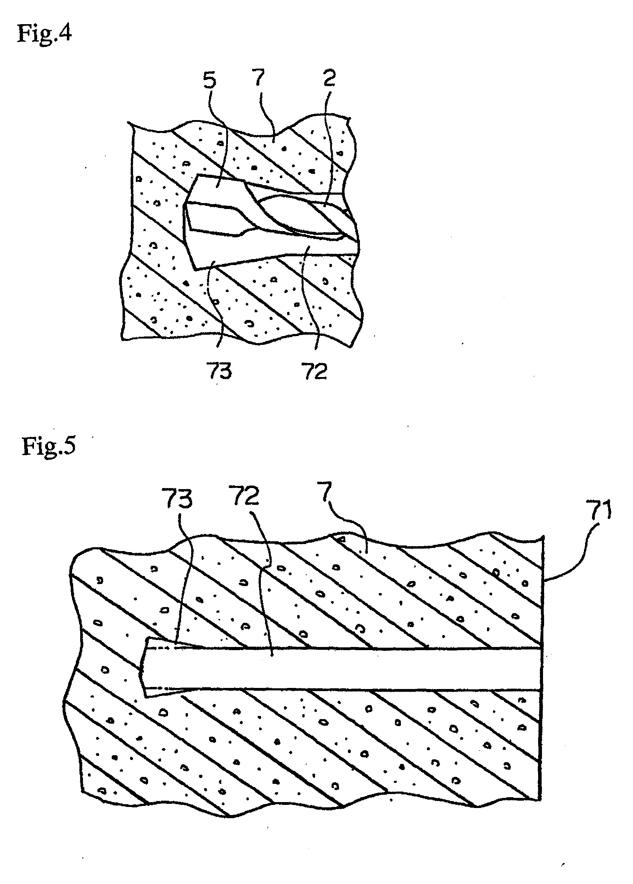

Next, one preferred embodiment of a method for boring an anchor fixing hole according to the present invention using the drill 1 for drilling an anchor fixing hole according to the above-mentioned embodiment will be described hereinafter with reference to FIGS. 2 through 5. Although the drill of the present invention is, as in the normal drill, used in combination with a chuckable driving source, the description, illustration, etc. of the driving source of the drill are omitted in this specification and drawings.

Firstly, as shown in FIG. 2, a lower hole is bored until the stopper 4 is abutted with the surface 71 of a concrete wall material 7 as a member to be bored, by using the drill 1 for boring an anchor fixing hole.

Nextly, in a state where the drill 1 is rotated about the axis, as shown in FIG. 3, the drill 1 is moved so as to cause precession (motion in which the direction of the rotation axis of a rotary body is changed) serving the stopper 4 as a fulcrum while keeping the tapered curved surface 41 of the stopper 4 abutted with the surface 71 of the concrete wall material 7.

When the drill 1 is moved in the manner as mentioned above, a hole wall of the lower hole at the area in the bottom part is cut by the cutting edge 5 disposed at the leading end of the drill 1, and the cut part of the wall hole is also cut in the vertical direction by short and quick vertical vibrations caused by the drill 1. As a result, an expanded bottom part 73 having an expanded configuration is formed at the area in the vicinity of the bottom part of the anchor fixing hole 72.

As apparent from the above description, according to the method for boring an anchor fixing hole according to this embodiment using the drill 1 for boring an anchor fixing hole according to the above-mentioned embodiment, an expanded bottom anchor fixing hole can be bored by only one kind of drill and without using two kinds of drills. Moreover, the drill 1 of the above-mentioned embodiment has a construction of that of the normal drill plus the stopper 4. Since the cost of the drill itself is not particularly high compared with the normal drill, the effect of cost down is great compared with the conventional boring method in which both the normal drill and expansion drill are used.

Moreover, according to the drill 1, of the above-mentioned embodiment, for boring an anchor fixing hole, the depth (length) of the lower hole of the expanded bottom anchor fixing hole 72 is determined by the distance L2 (see FIG. 1) from the leading end of drill 1 to the tapered curved surface 41 of the stopper 4. Accordingly, as in the above-mentioned embodiment, by boring the lower hole until the stopper 4 is abutted with the surface 71 of the member 7 to be bored, the correct depth of the lower hole can be obtained naturally. Thereafter, by moving the drill 1 so as to cause precession serving the stopper 4 as a fulcrum, the expanded bottom part 73 in the expanded bottom anchor hole 72 can be cut easily and surely.

Although the drill for boring an anchor fixing hole according to the present invention has hereinbefore been described in the form of one preferred embodiment, the drill for boring an anchor fixing hole according to the present invention is not limited to the above-mentioned embodiments. Instead, it can properly be changed without departing from the gist of the present invention and in the manner as mentioned hereinafter.

For example, the configuration and size of the cutting edge, the spiral groove and the shank of the drill main body can properly be changed.

Although the stopper 4 is joined to the drill main body 2 at its area near the shank 3 by welding in the above embodiments, the entire drill can integrally be formed by forging or casting in the drill of the present invention.

The stopper can be disposed at the drill main body in a state where the stopper is slidingly movable in the direction of the axis of the drill. Also, the stopper can detachably be attached to the drill main body.

Owing to the feature that the stopper is slidingly movably disposed at the drill main body in the direction of the axis of the drill, by changing the distance L2 (see FIG. 1) from the leading end of the drill to the tapered curved surface 41 of the stopper 4, the depth (length) of the anchor fixing hole to be bored can be changed.

Moreover, owing to the feature that the stopper is detachably disposed at the drill main body, by changing the distance L2 (see FIG. 1) or by changing the tapered angle θ (see FIG. 1) of the tapered curved surface of the stopper, the depth (length) of the anchor fixing hole to be bored or the size of the expanded bottom part 73 (see FIG. 5) and so forth can be changed.

As examples of the member which is to be bored by the drill for boring an anchor fixing hole according to the present invention, there can be listed a mortal wall material, a stone material, a brick material, a block material, etc. in addition to the concrete wall material.

According to the drill for boring an anchor fixing hole according to the present invention, an expanded bottom anchor fixing hole can be bored without using two kinds of drills and at a low cost.

## Claims

1. A drill for boring an anchor fixing hole having an expanded configuration at a nearby area of a bottom part of said hole, **characterized in that**
a stopper having a diameter larger than an outside diameter of said drill main body is disposed at a location near a shank of said drill main body and a surface of said stopper on a leading end side of said drill is a tapered curved surface which is expanded towards said shank side from said leading end side of said drill.

2. The drill for boring an anchor fixing hole according to claim 1, **characterized in that** an angle formed between an orthogonal line with respect to an axis of said drill and said tapered curved surface is 6 to 30 degrees.

3. The drill for boring an anchor fixing hole according to claim 1, **characterized in that** a difference (D1-D2) between an outside diameter D1 of a cutting edge disposed at a location near a leading end of said drill main body and an outside diameter D2 of said drill main body at an area where a spiral groove is formed, is 0.5 to 3 mm.

4. The drill for boring an anchor fixing hole according to claim 1, **characterized in that** a distance from a leading end of said drill main body to said tapered curved surface of said stopper is 30 to 100 mm.

5. A method for drilling an anchor fixing hole by using said drill for boring an anchor fixing hole according to claim 1, **characterized by** comprising the steps of
boring a member to be bored by using said drill for boring an anchor fixing hole until said stopper is abutted with a surface of said member to be bored, and
in a state where said drill for boring an anchor fixing hole is rotated about the axis, moving said drill for boring an anchor fixing hole so as to cause precession serving said stopper as a fulcrum while keeping said tapered curved surface of said stopper abutted with the surface of said member to be bored to cut a nearby area of a bottom part of said anchor fixing hole thereby to form an expanded bottom part having an expanded configuration.
